Europäisches Patentamt

European Patent Office

Office européen des brevets

(19)

(11) Publication number: **0 343 786**
**A2**

## (12) EUROPEAN PATENT APPLICATION

(21) Application number: **89304050.1**

(51) Int. Cl.⁴: **G06K 9/68**

(22) Date of filing: **24.04.89**

(30) Priority: **28.04.88 JP 104469/88**

(43) Date of publication of application:
**29.11.89 Bulletin 89/48**

(84) Designated Contracting States:
**DE FR GB IT**

(71) Applicant: **International Business Machines
Corporation
Old Orchard Road
Armonk, N.Y. 10504(US)**

(72) Inventor: **Nakamura, Yohji
1-1-32 Chuohrinkan
Yamato-shi Kanagawa-ken(JP)**
Inventor: **Casey, Richard G.
975 Easy Street
Morgan Hill California 95037(US)**
Inventor: **Toyokawa, Kazuharu
1 goh 17ban 2-chome Chuohrinkan
Yamato-shi Kanagawa-ken(JP)**

(74) Representative: **Johansson, Lars E.
IBM Svenska AB Intellectual Property
Department 4-01
S-163 92 Stockholm(SE)**

(54) Method and apparatus for reading and recording text in digital form.

(57) Apparatus and a method of reading and recording in digital form human readable text, in which a plurality of sets of character recognition trees (6E,F,G) are stored in a data processing memory (6), pages of text are scanned by a document scanning device (1) and each line of text is segmented into a plurality of character patterns (3) each comprising a plurality of picture elements (4) characterised by the steps, for each line of text: (a) determining which set of recognition trees has the smallest reject ratio of unidentified characters to identified characters, (b) choosing that set and displaying (8) the line of text highlighting the unidentified character and (c) modifying the chosen set of character recognition trees in response to input signals correctly identifying the unidentified characters.

EP 0 343 786 A2

DOCUMENT SCANNING DEVICE 1

IMAGE BUFFER 2

CHARACTER SEGMENTING LOGIC CIRCUIT 3

CONTROL DEVICE 5

9×11 PEL FRAME

· · · · 4

| CHARACTER CODE | A | Q | P | | |
|---|---|---|---|---|---|
| CHARACTER IMAGE | A | Q | P | | |

9

STATISTICS TABLE 11

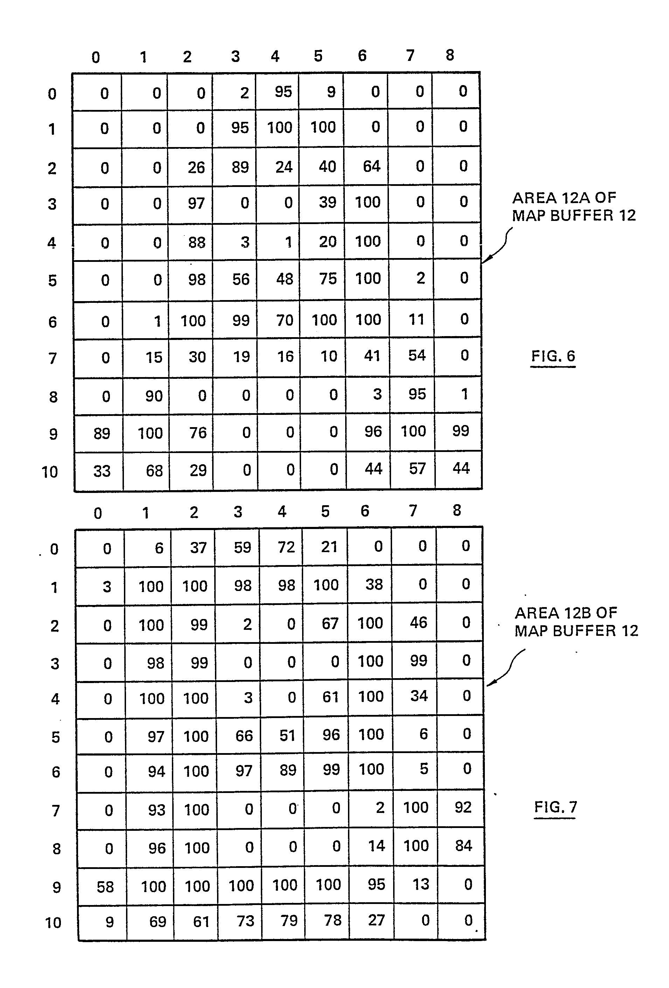

AREA 12A (FIG. 6) | AREA 12B (FIG. 7) 12

CHARACTER RECOGNITION LOGIC CIRCUIT 10

OUTPUT BUFFER 13

**6A** COURIER 10 **6B** PICA 10 6

6E 6F 6G

ALL CHARACTER IMAGES | ALL CHARACTER IMAGES

ALL CHARACTER CODES | ALL CHARACTER CODES

ELITE 12 | ORATOR

6C  6D

| | 1st CHAR | 2nd CHAR | 3rd CHAR | 4th CHAR | 25th CHAR | 50th CHAR | REJECT RATIO |
|---|---|---|---|---|---|---|---|
| 7A FLAG | | | | 1 | 1 | | |
| CHARACTER CODE | B | B | M | O | R | | 4% |
| CHARACTER IMAGE | | | | Q | P | | |
| 7B FLAG | | | | | | | |
| CHARACTER CODE | | | | | | | 12% |
| CHARACTER IMAGE | | | | | | | |
| 7N FLAG | | | | | | | |
| CHARACTER CODE | | | | | | | 10% |
| CHARACTER IMAGE | | | | | | | |

7

FIG. 1

8A → BBM⬚O⬚···⬚R⬚—

8B → ABM Q——— P —

8

## METHOD AND APPARATUS FOR READING AND RECORDING TEXT IN DIGITAL FORM

### Field of Invention

This invention relates to pattern recognition apparatus, and more particularly apparatus which, during the process of recognition of patterns or images of characters, modifies and refines the recognition process.

### Prior Art and Problems

Systems have been developed, which supply an image of printed characters of a document scanned by an image scanning device to a personal computer which performs character recognition according to character recognition algorithms. Since it is desired to recognise the characters at high speed in this system, character recognition trees of point sampling type wherein particular picture elements (pel) of character images are sequentially sampled, and plural nodes are sequentially selected depending upon whether the sampled pel is white or black. Character recognition trees are prepared for each type font. Since it is very difficult to modify the completed character recognition tree to recognise another font, a number of character recognition trees of the type fonts which are expected to be used frequently must be prepared. For example, character recognition trees of thirty kinds of fonts are stored in a memory. Accordingly, in the case that characters of a font which differs from the fonts of the stored trees in the memory are included in a document, the probability of the recognition is decreased.

R. G. Casey and C. R. Jik, "a processor-based OCR system", IBM Journal of Research Development, Volume 27, No. 4, July 1983, pp. 386 - 399 discloses a system which uses three trees as one set and combines the results from each tree.

F. M. Wahl, K. Y. Wong and R. G. Casey, "Segmentation and Text Extraction in Mixed Text/Image Documents", Computer Graphics and Image Processing, Volume 20, 1982, pp. 375 - 390, discloses a method for automatically discriminating text regions and non-text regions of printed document.

R. G. Casey and G. Nagy, "Recursive segmentation and classification of composite character patterns", the 6th International Conference on Pattern Recognition, October 1982, discloses the use of decision tree for effectively segmenting and recognising characters.

R. G. Casey and G. Nagy, "Decision Tree Design Using a Probabilistic Model", IEEE Transaction on Information Theory, Volume IT30, No. 1, January 1984, pp. 93 - 99, and R. G. Casey, "Automatic generation of OCR logic from scanned characters", IBM Technical Disclosure Bulletin, Volume 22, No. 3, August 1979, page 1189 disclose a method for making a mathematic model of a decision three from a probability of pels. K. Y. Wong, R. G. Casey and F. Wahl, "Document Analysis System:", IEEE 6th International Conference on Pattern Recognition, October 1982, discloses an adaptive OCR reading a document by partitioning the document to a text area and a non-text area.

R. G. Casey, S. K. Chai and K. Y. Wong, "Unsupervised construction of decision networks for pattern classification", IEEE 7th International Conference on Pattern Recognition, August 1984, and US Patent 4499596 by R. G. Casey and T. D. Friedman, disclose method for increasing a speed of recognition by determining some pels of text character before comparing an entire pattern of the character.

Y. Mano, Y. Nakamura and K. Toyokawa, "Automatic font selection for character recognition:", IBM Technical Disclosure Bulletin, Volume 30, No. 3, August 1987, PP. 1112 - 1114, discloses a method for determining which one of plural type fonts is used to print characters of a document.

### Summary of Invention

According to the present invention there is provided a method of operating apparatus for reading and recording in digital form human readable text, in which a plurality of sets of character recognition trees are stored in a data processing memory, pages of text are scanned by a document scanning device and each line of text is segmented into a plurality of character patterns each comprising a plurality of picture elements characterised by the steps, for each line of text: (a) determining which set of recognition trees has the smallest reject ratio of unidentified characters to identified characters, (b) choosing that set and displaying the line of text highlighting the unidentified character and (c) modifying the chosen set of character recognition trees in response to input signals correctly identifying the unidentified characters.

In one embodiment a document scanning device, under the control of pattern or character recognition algorithm or character recognition means, optically scans patterns or images of characters on a document, and generates image data of binary 1 or 0 representing the images. For simplifying description, the image data of the binary 1 or 0 is called an image of character or pattern. The images of characters of one page of document are stored in an image buffer under the control of the character recognition algorithm. Respective images of characters are segmented and stored in a working buffer. The character recognition algorithm recognises the images stored in the working buffer and stores the results into a result buffer. The character recognition algorithm stores character codes of characters recognised with high probability in the result buffer, and stores character codes and images of characters recognised with low capability and flags indicating the low probability in the result buffer. And, the character recognition algorithm displays the contents of the result buffer on a display screen of a display device. An operator viewing the displayed results of the recognition inputs a correct character code for erroneously recognised character through a keyboard to correct the character code of the erroneously recognised characters in the result buffer to the correct character code. And, the operations for modifying the trees based upon the results of recognition is started. The character recognition algorithm stores the image of the erroneously recognised character and its correct character code in a learning buffer.

The character recognition algorithm sequentially scans each pel of the character image in the learning buffer by using a scanning window. The size of the window is 3 x 3 pels, for example. The central pel of the window is positioned at the pel of the character image to be processed. The character recognition algorithm accesses an entry of a statistics table by using a bit pattern of neighbouring pels of the central pel as an address. In the accessed entry, a value representing a probability of appearing black in the pel being processed is stored. The character recognition algorithm fetches this value of probability and stores the value in a storage position of a probability map, which corresponds to the position of the central pel. The character recognition algorithm supplies the value of the probability map to the character recognition tree as an input, detects a leaf node generating high value of probability of recognition, fetching a character image of character code assigned to this leaf node, and forms the probability map of the character image. Next, the character recognition algorithm compares the values of both the probability maps for each storage position, detects a storage position at which one of the values is high and the other of the values is low, replaces the character code originally assigned to the detected leaf node by the address of the detected storage position, extends two nodes from the leaf node, assigns the originally assigned character code to one of the extended nodes, and assigns the character code in the character image in the learning buffer to the other node. The character recognition algorithm supplies the character code in the result buffer to the data processing device and stores the modified character recognition tree in the tree memory. Accordingly, the new tree is used in the subsequent character recognition operations.

In order that the invention may be fully understood a preferred embodiment will now be described with reference to the accompanying drawings in which:

Fig. 1 shows the block diagram of the character recognition apparatus of the present invention.

Figs. 2A, 2B, 2C, 2D and 2E are the flowcharts showing the recognition steps and the tree modifying steps of the character recognition method of the present invention.

Figs. 3 and 3A show the character images. Fig. 3B shows the character recognition tree. Fig. 3C shows one set of trees stored in a memory space of the tree memory. Fig. 3D shows the operations for inputting the values of probability in the map buffer to the tree shown in the Fig. 3B. Fig. 3E shows the operations for extending the one leaf node of the tree.

Fig. 4 shows the operations for scanning the character image by using the window.

Fig. 5 shows the addresses of the window.

Figs. 6 and 7 show the two areas of the map buffer storing the values of probability of each pel position of the character images A and B. And, Fig. 8 shows a flowchart showing the operations of the nodes of the tree.

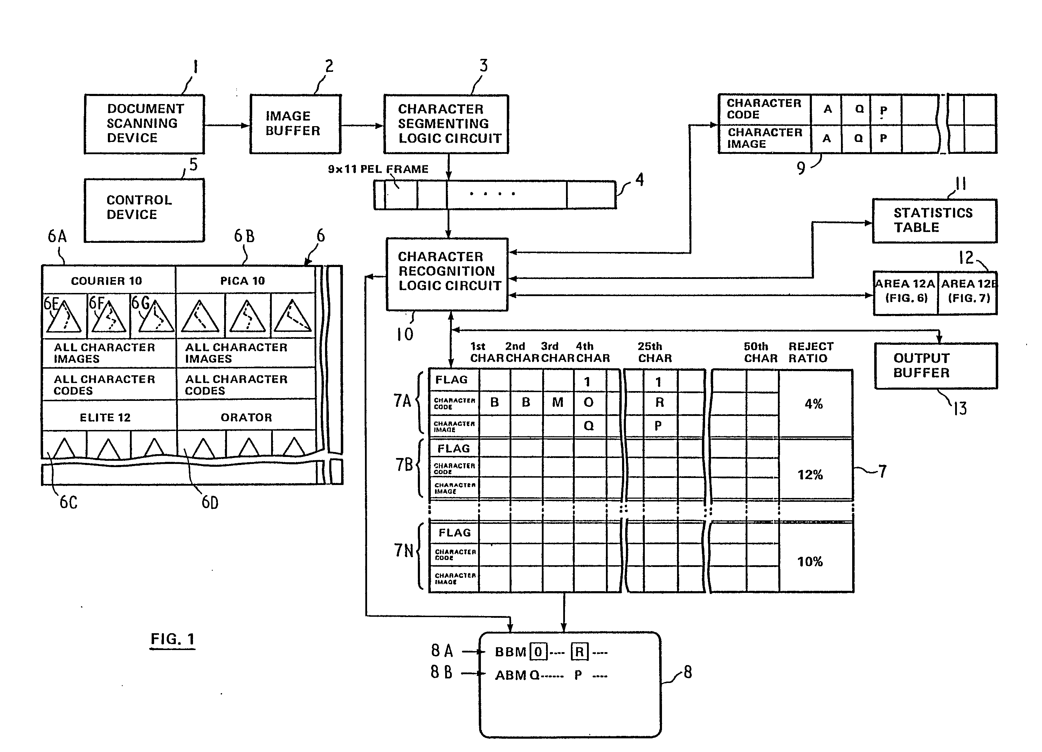

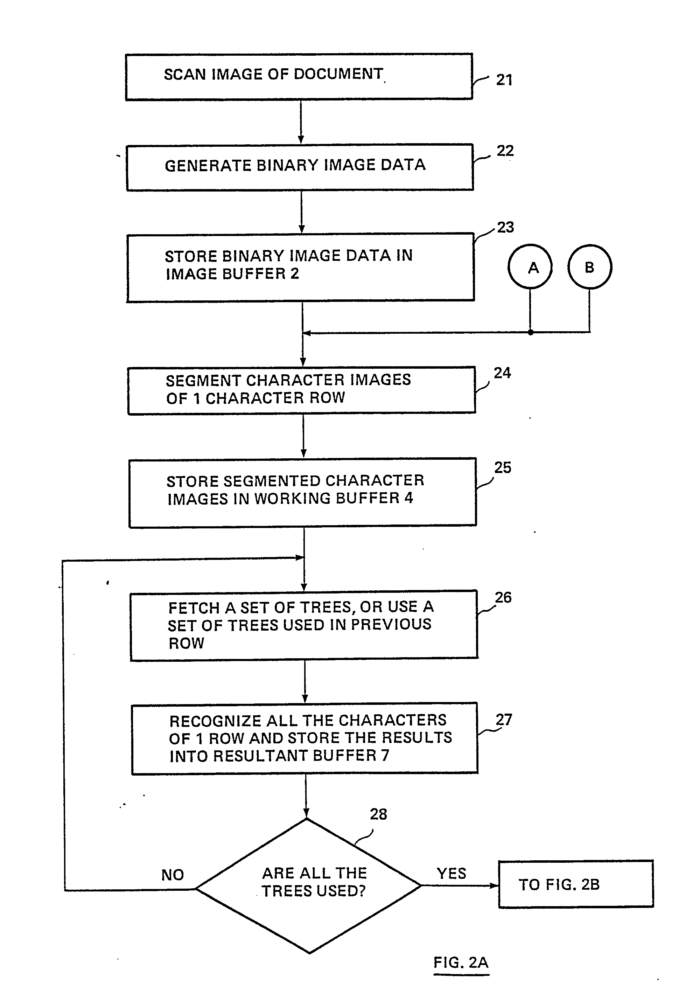

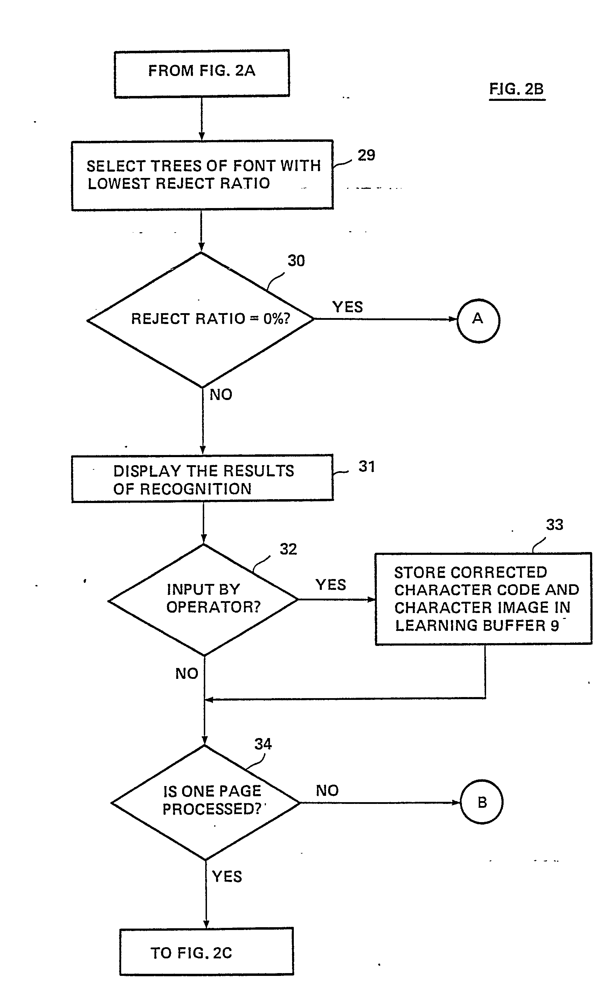

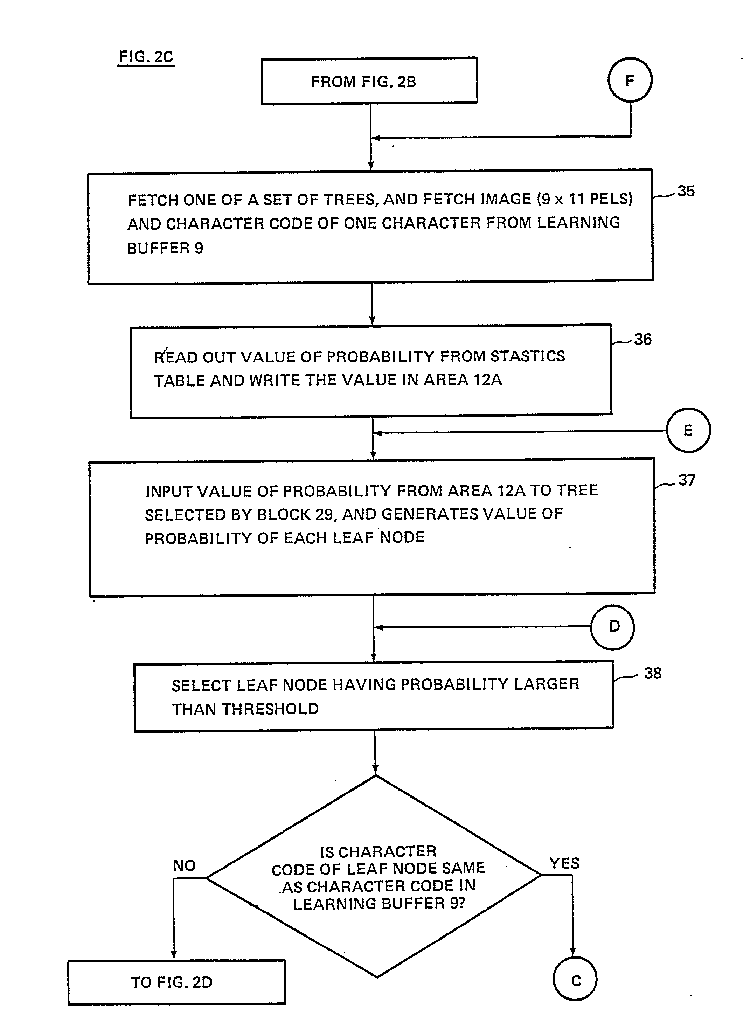

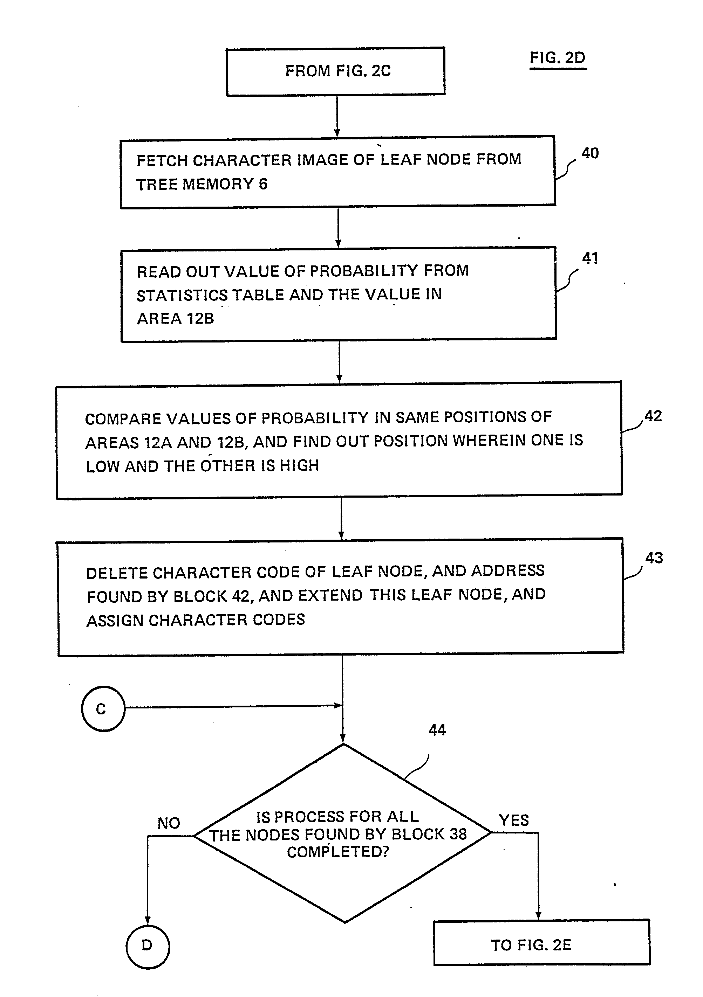

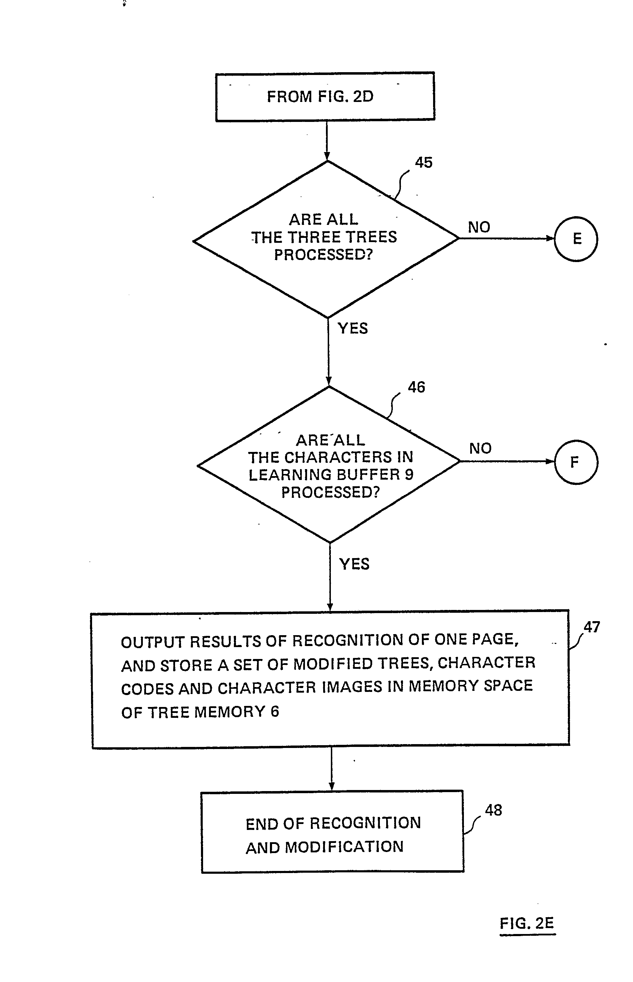

Referring to Figs. 1 and 2, the Fig. 1 shows circuit block diagram for modifying the trees by the learning function, in accordance with the present invention, and the Figs. 2A through 2E show flowchart representing the operations of the circuit block.

A document scanning device 1 is a well-known device which includes a document feed mechanism, a light source, lens, plural optical sense elements arranged in a line and threshold circuit. The number of the optical sense elements is 8 elements/mm, for example. That is, the pel density in the main scan direction is 200 pels/inch, (where 1 inch = 25.4 mm) and the pel density in the sub-scan direction perpendicular to the main scan direction is also 200 pels/inch, for example. One optical element generates an analog signal of one pel, and this analog signal is applied to the threshold circuit. Binary 1 signal representing black pel is generated when the analog signal is lower than a predetermined threshold value, and binary 0 signal

3

representing white pel is generated when the analog signal is higher than the threshold. These operations are performed by the blocks 21 and 22 in the Fig. 2A. The document includes plural character rows, and one character row includes about 50 printed alphanumeric characters. The reading operations of the documents are performed for each row, and the character images of one paper document are stored in the image buffer 2. This operations are performed by a block 23 in the Fig. 2A. A character segmenting logic circuit 3 is a well-known circuit which scans the image buffer to find out rectangle which contacts outer edges of each character in the first row, to segment each character in the first row. All the characters in one row are segmented and stored in frames of 9 x 11 pel of the working buffer 4 with the centre of the character image being positioned at the centre of the frame of 9 x 11 pel. These operations are performed by the blocks 24 and 25 of the Fig. 2A. The control device 5, such as the microprocessor, controls the above operations.

Before describing the next operations, type fonts of the characters and tree memory 6 are described. The characters of the document are printed by various type fonts. The type fonts are classified into 10 pitch group, 12 pitch group, letter gothic group, orator group and proportional group. And, the 10 pitch group includes the type fonts of Courier 10, Pica 10, Prestige Pica 10 and Titan 10, the 12 pitch group includes the type fonts of Courier 12, Elite 12, Prestige Elite 12 and OCR B12, the letter gothic group includes the type fonts of Orator and Presenter, and the proportional group includes the type fonts of Bold, Cubic/Triad, Roman and Title. The tree memory 6 stores the character recognition trees, the character images and the character codes for each type font. Referring to the Fig. 1, the tree memory 6 is divided into 18 memory spaces. One type font is assigned in one memory space. In the Fig. 1, only four memory spaces 6A, 6B, 6C and 6D are shown. The memory space 6A stores one set of character recognition trees or three character recognition trees 6E, 6F and 6G, all character images and all character codes of the type font "Courier 10". In the same manner, the memory spaces 6B, 6C and 6D store the character recognition trees, all character images and the all character codes of the Pica 10, Elite 12 and Orator.

After the operations of the block 25 in the Fig. 2A, the control circuit 5 starts the operations of the character recognition logic circuit 10. The circuit 10 in the block 26, fetches one set of the character recognition trees and all character codes from any of memory spaces. For example, it is assumed that the character recognition trees 6E, 6F and 6G and all character codes for the Courier 10 in the memory space 6A have been fetched. The operations proceeds to the block 27, and the character recognition logic circuit 10 accesses the first frame of the working buffer 4 to fetch the first character image of the first character row, recognises the first character image by using the first character recognition tree 6E, and stores the results in an auxiliary buffer (not shown). Next, the character recognition logic circuit 10 recognises the first character image again by using the second character recognition tree 6F and stores the results in the auxiliary buffer. Next, the character recognition logic circuit 10 recognises the first character image again by using the third character recognition tree 6G, and stores the results in the auxiliary buffer. Next, the character recognition logic circuit determines the three results, stored in the auxiliary buffer, and generates the final result depending upon the three results, as below;

Case 1: stores the character code in the result buffer 7 when a degree of accuracy is higher than a predetermined value.

Case 2: stores the character code which is the result of the recognition and the image of this character in the result buffer and set flag to 1, when the degree of accuracy is lower than the value. The flag 1 represents that this character is the rejected character.

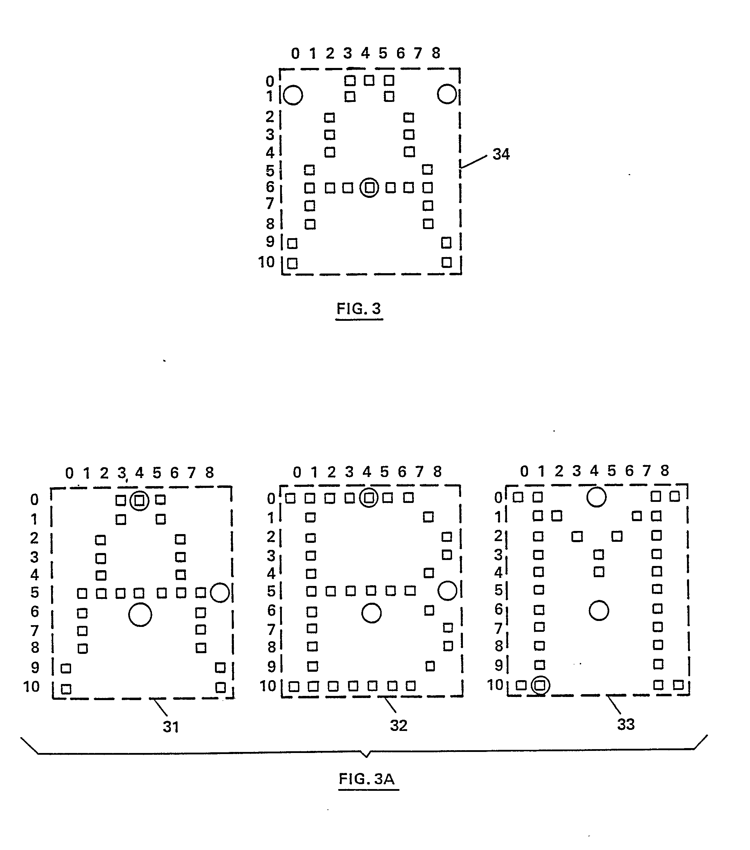

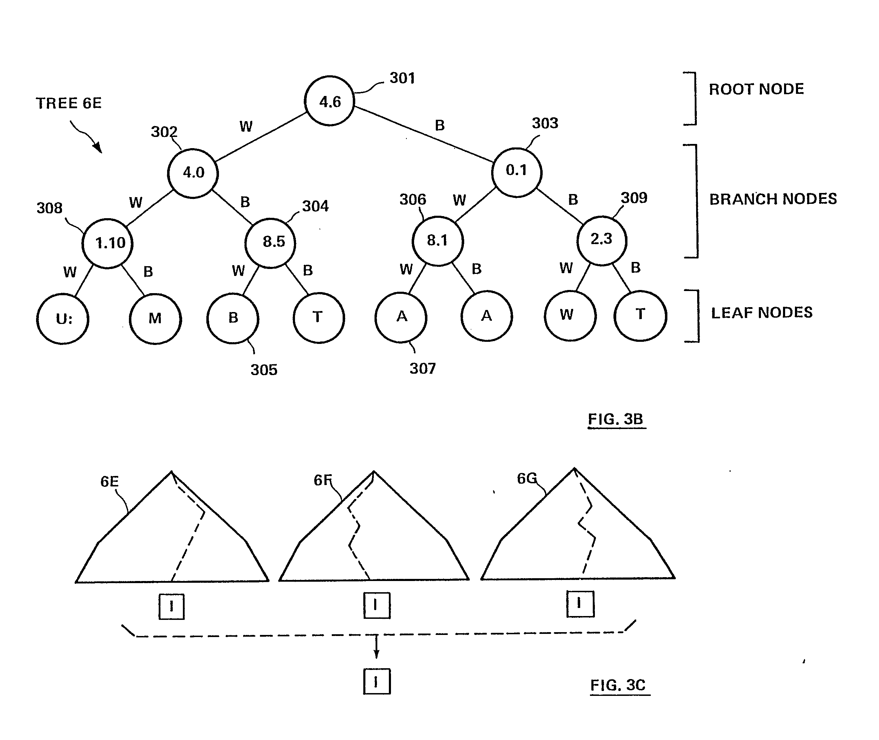

The above recognition operations of the character image are described with referring to Figs. 3A, 3B and 3C. It is assumed that the second and third characters "B" and "M" are typed by the font of the Courier 10, and the first character "A" is typed by a different type font. The images 31 - 33 of these characters have been stored in the three frames of the working buffer 4.

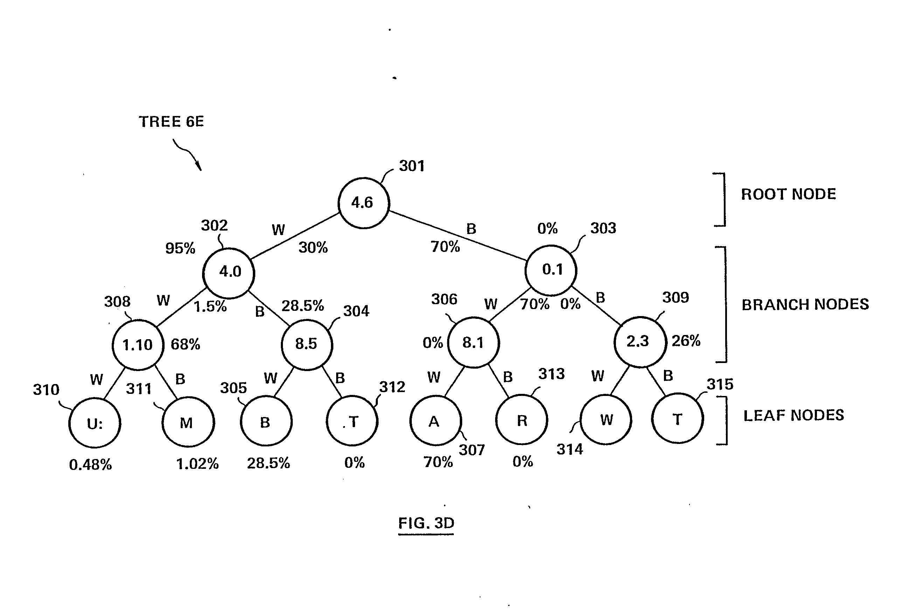

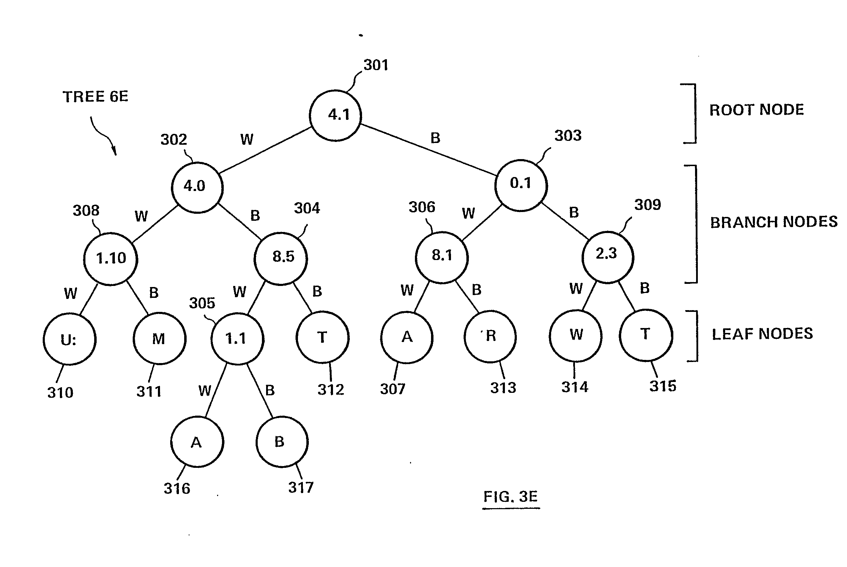

The Fig. 3B shows the simplified tree 6E among the three character recognition trees 6E - 6G for the Courier 10 in the memory space 6A shown in the Fig. 1. The character recognition tree determines or discriminate as to whether a pel at a predetermined pel position is white or black, selects the succeeding pels depending upon that the previous pel was black or white, and generates the final result. That is, the tree 6E selects a pel address (4, 6) of the image 31 in the frame in the first root node 301, determines as to whether the pel at this address is black or white, and proceeds to the next branch node 302 or 303 depending upon the result of the node 301. In the exemplary case, the answer of the root node 301 is white, the branch node 302 is selected at which a pel at an address (4, 0) is selected. And, this pel is determined whether this pel is white or black. Since the answer is black, the next branch node 304 is selected and a pel at an address (8, 5) is determined whether it is white or black. Since the answer is white, the operations proceed to a leaf node 305 and the results of recognition "B" is obtained. That is, although the first character 31 is A, the character recognition tree 6E has recognised this first character as B. If the type font of this first character were the type font of the Courier 10, as shown by the reference number 34 in the Fig. 3, the tree 6E traces from the node 301 to a node 307 through nodes 303 and 306, and generates the answer A. Since the actual results of the recognition is B, the character recognition logic circuit 10 stores the character code of the character B and the degree of accuracy of the recognition into the auxiliary buffer (not shown).

Next, the character recognition logic circuit 10 recognises the first character A again by using the tree 6F, stores the results in the auxiliary buffer, recognises the first character A again by using the tree 6G, stores the results in the auxiliary buffer, and generates the final result based upon the these three results. The recognition of the characters by using three kinds of trees is described in the first article hereinbefore.

It is assumed that the final result of the recognition of the first character is B. The character recognition logic circuit 10 stores the character code of the character B in the first character position in an area 7A of the result buffer 7. In the same manner as above described, the character recognition logic circuit 10 fetches the second character image B from the working buffer 4, recognises the image by using the three trees 6E, 6F and 6G to generate the final result and stores the final result into the second character position in the area 7A of the result buffer 7. In this manner, all the characters, e.g. fifty characters, in the first character row are recognised and the final results of all the characters are stored in the area 7A of the result buffer 7. Although the character recognition tree 6E shown in the Fig. 3B is shown as a simplified form, the tree actually includes 10 - 11 decision steps. When the total nodes is 2999, the number of the leaf nodes is about 1500. It is assumed that although the fourth printed character in the first character row of the document is actually Q, the final result of the recognition is O, and its degree of accuracy is low and that although the 25th printed character in the first character row of the document is actually P, the final result of the recognition is R and its degree of accuracy is low. In this case, the character recognition logic circuit 10 sets flag 1, and stores the character code of the character O and the actual image of the printed character Q in the fourth character position in the area 7A of the result buffer 7; also sets flag 1 and stores the character code of the character R and the actual image of the printed character P in the 25th character position in the area 7A of the result buffer 7, as shown in the Fig. 1. And, the character recognition logic circuit 10 calculates a reject ratio based upon the number of flags in the area 7A and stores it. In the exemplary case, since two flags 1 of the two characters among the total 50 characters are set, the reject ratio is 4% and this 4% is stored.

Next, in a block 28, it is determined whether all fonts, i.e. 18 kinds of fonts in the exemplary case have been used, or not, in the recognition operations. If the answer is NO, the operations return to the block 26 in which the memory space of the next font in the tree memory 6 is accessed, and the above described operations are performed. The block 28 generates the answer YES when the character code and the character image have been stored in the learning buffer 9 during the process of the character row.

When the recognition operations of the first character row using all the kinds of recognition trees for the eighteen type fonts has been completed, the answer of the block 28 is YES, and the results of the recognition have been stored in the eighteen areas 7A, 7B, ... 7N of the result buffer 7. For simplifying the Fig. 1, only the reject ratio is shown in each area 7B, 7N.

Next, the operations proceed to a block 29 in the Fig. 2B. The character recognition logic circuit 10 determines the reject ratio of each area 7A, ..., 7N of the result buffer 7, selects the type font of the lowest reject ratio, and uses the trees of the selected font in the subsequent processes. It is assumed that the reject ratio of the Courier 10 in the area 7A is minimum. Next, the character recognition logic circuit 10, in a block 30 of the Fig. 2B, determines as to whether the reject ratio 4% of the Courier 10 is equal to 0%. Since the answer is NO, the operations proceed to a block 31. If the answer of the block 30 is YES, the operations return to the block 24 of the Fig. 2A, and the operations for processing the next character row are started.

In the block 31, the character codes of the first character row stored in the area 7A of the result buffer 7 are supplied to a character generator circuit, not shown, the character images from the character generator circuit are displayed on the display area 8A of the display screen 8, wherein the 4th and 25th characters with the flag 1 being set are displayed by blink or highlight. And, all the character images of the first character row stored in the working buffer 4 are displayed on the display area 8B of the display screen 8. Accordingly, the operator could compare the actual character images of the document displayed on the display area 8B with the results of recognition displayed on the display area 8A of the display screen 8, and corrects the character code B of the first character in the area 7A of the result buffer 7 to the character code A by positioning a cursor at the first character and inputting the character code of the character A from a keyboard, not shown; and corrects the character code O of the 4th character in the area 7A to the character code Q by positioning the cursor at the 4th character and inputting the character code Q; and

5

corrects the character code R of the 25th character in the area 7A to the character code P by positioning the cursor at the 25th character and inputting the character code P. That is, in this step, the corrected character codes of all the characters of the first character row have been stored in the result buffer 7. A block 32 in the Fig. 2B determines as to whether the input operations by the operator are performed, or not, and if the answer is YES, the operations proceed to a block 33.

In the block 33, the corrected character code A in the first character in the area 7A of the result buffer 7 and the image A of the first character in the working buffer 4 are stored in the first position of the learning buffer 9, as shown; the corrected character code Q of the 4th character in the area 7A and the character image Q are stored in the next position of the learning buffer 9; and the corrected character code P of the 25th character in the area 7A and the character image P are stored in the third position of the learning buffer 9. That is, for each completion of the recognition of one character row, the algorithm determines as to whether the correction by the operator has been made, and if made, stores the contents into the learning buffer 9. If newly corrected character is the same as the character already stored in the learning buffer 9, this new character is not stored in the buffer 9. And, whenever the correction of the character codes of one character row in the result buffer 7 has been completed, the character codes including the corrected character codes in one character row are stored in an output buffer 13. When the operations of the block 33 have been completed, the operations proceed to a block 34. In the block 33, after the character code and the character image have been stored in the learning buffer 9, the trees used for the first character row is used in the recognition of the succeeding character rows. That is, a new set of trees are not used when the answer of the block 34 is NO and the operations returns to the block 24 and proceed to the block 26 through the block 25. That is, in this case, the block 26 uses the set of trees used in the first character row rather than next new set of trees. And, the block 28 generates the output YES.

The block 34 determines whether all the character rows of one page document have been processed. If NO, the operations return to the block 24 in the Fig. 2A to process the remaining character rows. If YES, the operations proceed to a block 35 in the Fig. 2C.

In the block 35, the character recognition logic circuit 10 fetches the character code A and the character image A from the first position of the learning buffer 9 and performs the operations of a block 36.

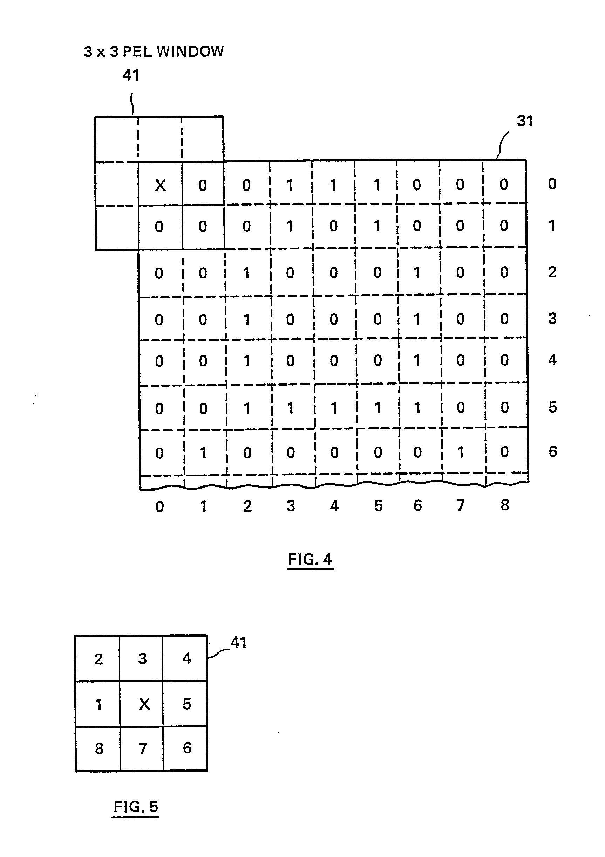

Before describing the operations of the block 36, 3 x 3 pel window 41 shown in Fig. 4, a statistics table 11 shown in the Fig. 1 and a map buffer 12 shown in the Fig. 1 are described.

Eight peripheral pels of the 3 x 3 pel window 41 are assigned with pel addresses, as shown in Fig. 5, and the 3 x 3 pel window 41 is so positioned that the central pel X is positioned at the upper-left corner pel of the character image, as shown in the Fig. 4. The statistics table 11 stores value representing a probability of appearing black in the central pel X or the current pel being processed, as shown in Table 1. The bit in the pel address 1 in the 3 x 3 pel window 41 represents the most significant bit (MSB) and the bit in the pel address 8 represents the least significant bit (LSB). The map buffer 12 includes an area 12A and an area 12B. And, the size of each area is the same as the size of the frame, i.e. 9 x 11 pel, in the working buffer 4 in the Fig. 1. That is, each size of the areas 12A and 12B is the same as the size of each of the images 31, 32 and 33 shown in the Fig. 3A.

Describing the operations of the block 36, the character recognition logic circuit 10 positions the current pel X of the 3 x 3 pel window 41 at the upper left pel of the image 31 of the character A, as shown in the Fig. 4. It is noted that the pattern of the binary 1 and 0 in the Fig. 4 represents the image 31 shown in the Fig. 3A. The values of the addresses 1, 2, 3, 4 and 8 of the 3 x 3 pel window 41 which are located outside of the image 31 are binary 0. In this case, the addresses 1 - 8 of the window are the binary values 00000000. The character recognition logic circuit 10 accesses the statistics table 11 by using the above binary values as an address. The Table 1 is shown below.

TABLE 1

| (STATISTICS TABLE 11) | | |
|---|---|---|
| ENTRY | ADDRESS | PROBABILITY OF BLACK (%) |
| 0 | 00000000 | 0 |
| 1 | 00000001 | 0 |
| 2 | 00000010 | 7 |
| 3 | 00000011 | 3 |
| 10 | 00001010 | 2 |
| 18 | 00010010 | 26 |
| 38 | 00100110 | 88 |
| 41 | 00101001 | 98 |
| 44 | 00101100 | 40 |
| 49 | 00110001 | 95 |
| 100 | 01100100 | 100 |
| 129 | 10000001 | 0 |
| 130 | 10000010 | 9 |
| 141 | 10001101 | 95 |
| 199 | 11000111 | 3 |
| 248 | 11111000 | 100 |
| 255 | 11111111 | 100 |

As described hereinbefore, when the current pel X of the 3 x 3 pel window 41 is positioned at the upper left pel (0, 0) of the character image 31 in the Fig. 4, the peripheral pels of the current pel X, i.e. the pels of the pel addresses 1 - 8 (Fig. 5) are 00000000. The character recognition logic circuit 10 accesses the entry 0 of the statistics table 11 by using the bit pattern 00000000 as the address, reads out the value of probability, 0 (%), and stores the value 0 (%) in the upper left position (0, 0) of the area 12A of the map buffer 12, as shown in Fig. 6.

Next, the character recognition logic circuit 10 moves the window 41 on the image 31 of the Fig. 4 by one pel position in the rightward direction to the pel address (1, 0). In this case, the bit pattern of the addresses 1 - 8 of the window 41 is 00000000, and the character recognition logic circuit 10 accesses the statistics table 11 by using the bit pattern as the address, writes the value of probability, 0 (%) into the pel address (1, 0) of the area 12A. In this manner, the character recognition logic circuit 10 sequentially shifts the window 41 in the rightward direction, and sequentially writes the values of probability of black in the area 12A of the map buffer 12. After completing the first pel row, the character recognition logic circuit 10 positions the current pel X of the window 41 at the first pel (0, 1) of the second pel row and processes the pels of the second pel row. In this manner, all the pel rows are processed. The Fig. 6 shows the values of probability of black of each pel position of the image 31 of the character A.

For example, when the current pel X of the window 41 is positioned at the pel position (4, 0) of the Fig. 4, the bit pattern of the peripheral pels is 10001101, and the entry 141 of the statistics table 11 is accessed, and the value of probability, 95 (%) is written in the pel position (4, 0) of the area 12A in the Fig. 6. And, when the current pel X of the window 41 is positioned at the pel position (2, 2) of the Fig. 4, the bit pattern of the peripheral pels is 00010010, and the entry 18 of the statistics table 11 is accessed, and the value of probability, 26 (%) is written into the pel address (2, 2) of the area 12A of the Fig. 6.

Next, the operations proceed to a block 37 in the Fig. 2C, and the character recognition logic circuit 10 supplies the values of the probability of the region 12A to each of the character recognition trees selected in the block 29 of the Fig. 2B, i.e. the three trees 6E, 6F and 6G for the Courier 10. Describing the operations for the tree 6E shown in the Fig. 3B, the root node 301 of the tree 6E selects the pel position (4, 0). Accordingly, the value of probability, 70 (%), in the position (4, 0) of the area 12A in the Fig. 6 is fetched. This value 70% represents that, when the image of the character A shown in the Fig. 3A are printed one hundred times on different positions on a paper, the pel position (4, 6) of 70 characters, i.e. 70%, among the 100 characters are printed as black, and the pel position (4, 6) of 30 characters, i.e. 30%, among the 100 characters is printed as white. The operations performed when this value is inputted to the tree 6E is described with referring to the Fig. 3D. From the above description, the probability of the white output of the root node 301 is 30%, and the probability of the black output of the root node 301 is 70%. Next, the same

7

operations are performed at the branch nodes 302 and 303. In the branch node 302, the value of probability, 95% of the position (4, 0) is used. Accordingly, the probability of the white output of the node 302 is 30% x 5% = 1.5%, and the probability of the black output is 30% x 95% = 28.5%. Next, in the branch node 308, the value of probability appearing black, 68% at the pel position (1, 10) of the area 12 is used. The probability of the black output of the branch node 308 is 1.5% x 68% = 1.02%, and this value is the value of probability of the leaf node 311. The probability of the white output of the branch node 308 is 1.5% x 32% = 0.48%, and this value is the value of probability of the leaf node 310.

In the branch node 304, the value of probability, 0%, of the position (8, 5) in the area 12A is fetched. The probability of the black output of the branch node is 28.5% x 0% = 0%, and this value is the probability of the leaf node 312. The probability of the white output of the branch node 304 is 28.5% x 100% = 28.5%, and this value is the probability of the leaf node 305. The same operations are performed at the branch nodes 303, 306 and 309 and the leaf nodes 307 and 313, and the probability values shown in the Fig. 3D are generated. It is noted that the probability supplied to the branch node 309 is 0%. In the case that the probability supplied to the node is 0%, the values of probability in both the white and black outputs of this branch node, so that the operations are terminated at this branch node.

Next, the operations proceed to a block 38 in the Fig. 2C, the character recognition logic circuit 10 compares the value of probability of each leaf node with a predetermined threshold value, for example 2%, selects the leaf nodes having the values of probability higher than the threshold value, and selects one of the selected leaf nodes. In the exemplary case, only two leaf nodes 305 and 307 were selected and the leaf node 305 is selected initially. Although only two leaf nodes are selected in the exemplary case, the number of the leaf nodes having the higher value than the threshold value is in the range of 10 - 20 since the actual tree has about 1500 leaf nodes.

Next, the operations proceed to a block 39, the character recognition logic circuit 10 determines whether the character code A in the learning buffer 9 being processed is the same as the character code B of the leaf node 305, or not. Since the answer is NO, the operations proceed to a block 40 of the Fig. 2D. If the answer is YES, the operations proceed to a block 44 without further processing the leaf nodes.

In the block 40, the character recognition logic circuit 10 fetches the character image of the leaf node 305 from the tree memory 6. In the exemplary case, the image of the character B of the leaf node 305 is fetched from the memory space 6A of the tree memory 6. The operations proceed to a block 41, and the character recognition logic circuit 10 calculates the values of probability of black for all the pels of the character image B fetched in the block 40, and write the values in the area 12B of the map buffer 12. The operations of the block 41 are the substantially same as that of the block 36. That is, by using the 3 x 3 pel window 41, the character image of the character B is scanned. And, by using the bit pattern of the pel addresses 1 - 8 of the window 41 as the address, the statistics table 11 is accessed, and the value of probability appearing the current pel X is sequentially written in the area 12B of the map buffer 12. Fig. 7 shows the values of probability of black in each pel position of the character B written into the area 12B in the manner described above.

Next, the operations proceed to a block 42 in the Fig. 2D, and the character recognition logic circuit 10 sequentially compares the values of probability stored in the same pel positions in the areas 12A and 12B of the map buffer 12 from the pel position (0, 0), and finds out a pel position at which the value in one of the areas 12A and 12B is low and the value in the other of the areas 12A and 12B is high. That is, the pel position, at which a difference in values between areas 12A and 12B is maximum, is detected. In the exemplary case, the character recognition logic circuit 10 detects that, at the pel position (1, 1), the value of probability of the area 12A is 0%, while the value of probability of the area 12B is 100%.

The operations proceed to a block 43, and the character recognition logic circuit 10 deletes the original character code of the leaf node 305 selected by the block 38, writes the address (1, 1) found by the block 42 into the leaf node 305, and extends two nodes 316 and 317 from the leaf node 305, as shown in the Fig. 3E. And, the character recognition logic circuit 10 writes the code of the character, i.e. the character B, having the higher probability at the position (1, 1), as shown in the Figs. 6 and 7, into the extended node 317 connected to the black output of the leaf node 305, and writes the code of the character, i.e. the character A, having the lower probability at the position (1, 1) into the extended node 316 connected to the white output of the leaf node 305.

Next, the operations proceed to the block 44, and the character recognition logic circuit 10 determines as to whether the processes of all the nodes found by the block 38 have been completed. In the exemplary case, since the process of the node 307 has not been completed, the answer of the block 44 is NO, and the operations return to the block 38. In the block 38, the character recognition logic circuit 10 selects the unprocessed leaf node 307, and, in the block 39, determines as to whether the character code of the character A of the leaf node 307 is the same as the character code of the character A in the learning buffer

8

9. Since the answer of the block 39 is YES, the operations proceed to the block 44 in the Fig. 2D, and detect that the process of all the leaf nodes 305 and 307 has been completed. And, the operations proceed to a block 45 in the Fig. 2E, the circuit 10 determines as to whether all the trees 6E, 6F and 6G have been processed. In the exemplary case, since the trees 6F and 6G have not been processed yet, the operations return to the block 37. When the modification of all the trees has been completed, the answer of the block 45 is YES, and the operations proceed to a block 46 in Fig. 2E. In the block 46, the character recognition logic circuit 10 determines as to whether all the characters in the learning buffer 9 have been processed, that is, all the characters to be corrected which were found on one page document have been processed. If the answer of the block 46 is NO, the operations return to the block 35, and if the answer is YES, the operations proceed to a block 47. In the block 47, the character recognition logic circuit 10 outputs the results of the recognition of one page document, i.e. all the character codes stored in the output buffer 13, and stores the one set of modified trees, all the character codes and all the character image in an unused memory space, and terminates the character recognition and tree modification operations in a block 48.

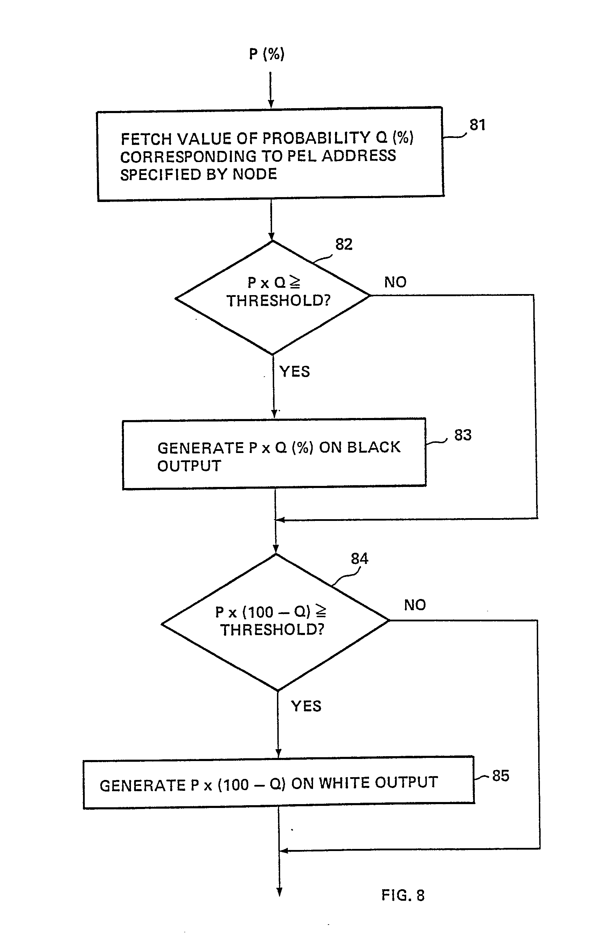

Fig. 8 shows the operations of the nodes in the Figs. 3B, 3D and 3E. The operations for supplying the values of probability in the map buffer 12 to the branch node 302 of the tree 6E are described. Since the value of probability inputted to the branch node 302 is 30%, the input value of probability to a block 81 in the Fig. 8 is 30%. In the block 81, the value to probability Q, i.e. 95%, at the pel address (4, 0) of the area 12A is fetched. Next, in a block 82, the value of PXQ, i.e. 30 x 95% = 28.5%, is calculated, and this calculated value is compared with the threshold value, i.e. 1%. In this case, the answer of the block 82 is YES, the node 302, in a block 83, generates PXQ = 28.5% on the black output, as shown in the Fig. 3D. Next, in a block 84, P x (100 - Q), i.e. 30 x (100 - 95) = 1.5%, is compared with the threshold value 1%. In this case, since the answer of the block 84 is YES, 1.5% is generated on the white output of the branch node 302.

Next, the operations for recognising the character image stored in the working buffer 4 and having each pel represented by the binary 1, i.e. black 100%, or the binary 0, i.e. black 0%, are described.

It is assumed that the node is connected to the black output of the preceding node, the probability inputted to this node is 100%. The value of probability Q in the block 81 at the character recognition is 100% or 0%. Assuming that the value of probability Q is 100%, PXQ in the block 82 is 100%, and in the block 83, 100% is generated on the black node of this node. Since the answer of the block 84 is NO, the white output of this node generate no output.

The block 43 in the Fig. 2D performs the following additional operations. That is, after assigning the codes of the characters A and B to the extended leaf nodes 316 and 317, respectively, the values of probability of recognition of the characters A and B are stored in these nodes. These values are calculated by the following manners.

It is assumed that, before the modification, the node 305 has the probability of recognition of 40% for the character B. The values of probability of recognition of the extended final leaf nodes 316 and 317 are decided by the probability of recognition, 40%, the probability 28.5% inputted to the node 305, and the probability in the address (1, 1) of the areas 12A and 12B of the map buffer 12 specified by the node 305. The probability of recognition of the node 316 is calculated by the following manner. The probability appearing black in the pel position of the character A in the node 305 is 0%, as apparent from the address (1, 1) of the Fig. 6. That is, the probability of appearing white in the pel position is 100%.

Accordingly, the probability of recognising the character A in the leaf node 316 is 28.5% x 100% = 28.5%, while the probability of recognising the character B is 40% x 0% = 0%.

The probability of recognition in the leaf node is calculated in the following manner. The probability of appearing black in the pel (1, 1) of the character B is 100%, as apparent from the pel address (1, 1) of the Fig. 7. Accordingly, the probability of recognising the character B at the leaf node 317 is 40% x 100% = 40%, while the probability of recognising the character A is 28.5% x 0% = 0%. The probability newly assigned to these nodes 316 and 317 are used in the block 27 in the Fig. 2A.

For simplifying the description, the size of the frame of the working buffer 4 is 9 x 11 pels, but the frame actually has the size of 32 x 40 pels.

Although the description was directed to the learning operations of the character recognition trees, i.e. the operations for modifying the trees, the invention could be used in the algorithm performing the character recognition by sampling the characteristics of the characters and storing characteristics list representing the characteristics for each character.

Although the recognition of the alphanumeric character patterns and the learning operations have been described, the Japanese characters or finger patterns are used in place of the alphanumeric characters.

In the embodiment, the correction of the erroneously recognised character code to the correct code was made for each character row, but the operations could be performed every plural character rows.

Although the trees are modified after the completion of character recognition of one page document, the modification of trees could be made after plural pages of documents have been recognised.

Effects of Invention

The effects of the present inventions are that time period for modifying the character recognition trees is short; the memory space used for the modification is small; the operator's intervention is minimum, the modification of the trees is performed during the character recognition operations, and the minimum number of samples for the learning and modifying operations is required.

**Claims**

1. A method of operating apparatus for reading and recording in digital form human readable text, in which a plurality of sets of character recognition trees (6E,F,G) are stored in a data processing memory (6), pages of text are scanned by a document scanning device (1) and each line of text is segmented into a plurality of character patterns (3) each comprising a plurality of picture elements (4) characterised by the steps, for each line of text:

(a) determining which set of recognition trees has the smallest reject ratio of unidentified characters to identified characters,

(b) choosing that set and displaying (8) the line of text highlighting the unidentified character and

(c) modifying the chosen set of character recognition trees in response to input signals correctly identifying the unidentified characters.

2. A method as claimed in claim 1 in which after the first line of text on a page has been identified and the chosen set of character recognition trees modified, that chosen set of trees is solely used to recognise the succeeding lines until the reject ratio for a line exceeds a predetermined level.

3. A method as claimed in Claim 2 in which for a succeeding line in which the reject ratio exceeds the predetermined level the steps a, b and c are repeated.

4. A method as claimed in claim 1, 2 and 3 in which each of the sets of character recognition trees is associated with a particular type font.

5. Apparatus for reading and recording in digital form human readable text in which a plurality of sets of character recognition trees (6E, F, G) are stored in a data processing memory (6) including a document scanning device (1), a character segmenting circuit (3) and picture element buffer store (4), a second memory (7), a display device (8) and a character recognition logic circuit (10) characterised in that the apparatus is controlled to perform the steps of, for each line of text:

(a) determining which set of recognition trees has the smallest reject ratio of unidentified characters to identified characters,

(b) choosing that set and displaying (8) the line of text highlighting the unidentified character and

(c) modifying the chosen set of character recognition trees in response to input signals correctly identifying the unidentified characters.

6. Character recognition apparatus for recognising images of characters of a document comprising:

storage means for storing images of characters of said document;

character recognition trees for recognising said images of characters;

result buffer means for storing character codes of characters recognised with high probability, and storing character codes and images of characters recognised with low probability;

means for correcting said character code recognised with low probability to a correct character code;

learning buffer for storing said correct character code and its character image;

means for forming first map which stores first values of probability appearing black in each of picture elements of said character image in said learning buffer;

means for supplying said first values of probability to said character recognition tree to detect leaf node which recognised said character image in said learning buffer;

means for forming second map which stores second values of probability appearing black in each of picture elements of character image of character code assigned to said detected leaf node;

means for comparing, for each pel position of said first and second maps, the first value in said first map with the second value in said second map to detect pel address at which the value of one of said maps is high and the value of the other of said maps is low; and

means for replacing said character code of said detected leaf node by said detected pel address, extending two nodes from said detected leaf nodes, assigning one of said extended nodes with said character code originally assigned to said detected leaf node, and assigning the other of said extended nodes with said character code in said learning buffer.

EP 0 343 786 A2

1 DOCUMENT SCANNING DEVICE

2 IMAGE BUFFER

3 CHARACTER SEGMENTING LOGIC CIRCUIT

9×11 PEL FRAME

4 . . . .

| CHARACTER CODE | A | Q | P | | |
|---|---|---|---|---|---|
| CHARACTER IMAGE | A | Q | P | | |

9

5 CONTROL DEVICE

11 STATISTICS TABLE

10 CHARACTER RECOGNITION LOGIC CIRCUIT

12

| AREA 12A (FIG. 6) | AREA 12B (FIG. 7) |
|---|---|

6A

| COURIER 10 | PICA 10 | 6 |
|---|---|---|

6E 6F 6G

ALL CHARACTER IMAGES — ALL CHARACTER IMAGES

ALL CHARACTER CODES — ALL CHARACTER CODES

ELITE 12 — ORATOR

6C — 6D

13 OUTPUT BUFFER

7

|  | 1st CHAR | 2nd CHAR | 3rd CHAR | 4th CHAR | 25th CHAR | 50th CHAR | REJECT RATIO |
|---|---|---|---|---|---|---|---|
| 7A FLAG | | | | 1 | 1 | | 4% |
| CHARACTER CODE | B | B | M | O | R | | |
| CHARACTER IMAGE | | | | Q | P | | |
| 7B FLAG | | | | | | | 12% |
| CHARACTER CODE | | | | | | | |
| CHARACTER IMAGE | | | | | | | |
| 7N FLAG | | | | | | | 10% |
| CHARACTER CODE | | | | | | | |
| CHARACTER IMAGE | | | | | | | |

8A → BBM [O] ---- [R] ----

8B → ABM Q ------ P ----

8

FIG. 1

```
┌─────────────────────────────────┐
│  SCAN IMAGE OF DOCUMENT         │─── 21
└─────────────────────────────────┘
                │
                ▼
┌─────────────────────────────────┐
│  GENERATE BINARY IMAGE DATA     │─── 22
└─────────────────────────────────┘
                │
                ▼
┌─────────────────────────────────┐        ⒜    ⒝
│  STORE BINARY IMAGE DATA IN     │─── 23
│  IMAGE BUFFER 2                 │
└─────────────────────────────────┘
                │
                ▼
┌─────────────────────────────────┐
│  SEGMENT CHARACTER IMAGES       │─── 24
│  OF 1 CHARACTER ROW             │
└─────────────────────────────────┘
                │
                ▼
┌─────────────────────────────────┐
│  STORE SEGMENTED CHARACTER      │─── 25
│  IMAGES IN WORKING BUFFER 4     │
└─────────────────────────────────┘
                │
                ▼
┌─────────────────────────────────┐
│  FETCH A SET OF TREES, OR USE A │─── 26
│  SET OF TREES USED IN PREVIOUS  │
│  ROW                            │
└─────────────────────────────────┘
                │
                ▼
┌─────────────────────────────────┐
│  RECOGNIZE ALL THE CHARACTERS   │─── 27
│  OF 1 ROW AND STORE THE RESULTS │
│  INTO RESULTANT BUFFER 7        │
└─────────────────────────────────┘
                │
                ▼
             28
        ◇ ARE ALL THE ◇
NO ──── ◇  TREES USED? ◇ ──── YES ──── ┌──────────────┐
                                        │  TO FIG. 2B  │
                                        └──────────────┘
```

FIG. 2A

FIG. 2B

```
┌─────────────────────┐
│    FROM FIG. 2A      │
└─────────────────────┘
           │
           ▼
┌─────────────────────┐
│ SELECT TREES OF FONT │── 29
│ WITH LOWEST REJECT   │
│ RATIO                │
└─────────────────────┘
           │
           ▼
      ╱─────────╲  30
     ╱ REJECT    ╲     YES      ┌───┐
    ╱ RATIO = 0%? ╲──────────▶ │ A │
     ╲           ╱              └───┘
      ╲─────────╱
           │ NO
           ▼
┌─────────────────────┐
│ DISPLAY THE RESULTS  │── 31
│ OF RECOGNITION       │
└─────────────────────┘
           │
           ▼                                      33
      ╱─────────╲  32                  ┌──────────────────────┐
     ╱ INPUT BY  ╲    YES              │ STORE CORRECTED      │
    ╱ OPERATOR?   ╲──────────────────▶ │ CHARACTER CODE AND   │
     ╲           ╱                     │ CHARACTER IMAGE IN   │
      ╲─────────╱                      │ LEARNING BUFFER 9    │
           │ NO                        └──────────────────────┘
           │◀──────────────────────────────────┘
           ▼
      ╱─────────╲  34
     ╱ IS ONE    ╲     NO       ┌───┐
    ╱ PAGE        ╲──────────▶ │ B │
     ╲ PROCESSED? ╱             └───┘
      ╲─────────╱
           │ YES
           ▼
┌─────────────────────┐
│    TO FIG. 2C        │
└─────────────────────┘
```

FIG. 2C

```
          ┌─────────────────────┐              ╭───╮
          │    FROM FIG. 2B      │              │ F │
          └─────────────────────┘              ╰───╯
```

┌──────────────────────────────────────────────────┐
│ FETCH ONE OF A SET OF TREES, AND FETCH IMAGE (9 x 11 PELS)  │ ─ 35
│ AND CHARACTER CODE OF ONE CHARACTER FROM LEARNING  │
│ BUFFER 9                                           │
└──────────────────────────────────────────────────┘

┌──────────────────────────────────────────────────┐
│ READ OUT VALUE OF PROBABILITY FROM STASTICS        │ ─ 36
│ TABLE AND WRITE THE VALUE IN AREA 12A              │
└──────────────────────────────────────────────────┘
                                              ╭───╮
                                              │ E │
                                              ╰───╯
┌──────────────────────────────────────────────────┐
│ INPUT VALUE OF PROBABILITY FROM AREA 12A TO TREE   │ ─ 37
│ SELECTED BY BLOCK 29, AND GENERATES VALUE OF       │
│ PROBABILITY OF EACH LEAF NODE                      │
└──────────────────────────────────────────────────┘
                                              ╭───╮
                                              │ D │
                                              ╰───╯
┌──────────────────────────────────────────────────┐
│ SELECT LEAF NODE HAVING PROBABILITY LARGER         │ ─ 38
│ THAN THRESHOLD                                     │
└──────────────────────────────────────────────────┘

NO ◄──────        IS CHARACTER                ──────► YES
            CODE OF LEAF NODE SAME
            AS CHARACTER CODE IN
            LEARNING BUFFER 9?

┌─────────────────┐                            ╭───╮
│   TO FIG. 2D     │                            │ C │
└─────────────────┘                            ╰───╯

FIG. 2D

FROM FIG. 2C

FETCH CHARACTER IMAGE OF LEAF NODE FROM
TREE MEMORY 6 — 40

READ OUT VALUE OF PROBABILITY FROM
STATISTICS TABLE AND THE VALUE IN
AREA 12B — 41

COMPARE VALUES OF PROBABILITY IN SAME POSITIONS OF
AREAS 12A AND 12B, AND FIND OUT POSITION WHEREIN ONE IS
LOW AND THE OTHER IS HIGH — 42

DELETE CHARACTER CODE OF LEAF NODE, AND ADDRESS
FOUND BY BLOCK 42, AND EXTEND THIS LEAF NODE, AND
ASSIGN CHARACTER CODES — 43

C

44

IS PROCESS FOR ALL
THE NODES FOUND BY BLOCK 38
COMPLETED?

NO

YES

D

TO FIG. 2E

```
        ┌─────────────────────┐
        │    FROM FIG. 2D      │
        └─────────────────────┘
                   │
                   ▼
               ╱───────╲                    45
             ╱  ARE ALL  ╲
            ╱ THE THREE    ╲    NO      ( E )
            ╲ TREES        ╱─────────▶
             ╲ PROCESSED? ╱
               ╲───────╱
                   │ YES
                   ▼
               ╱───────╲                    46
             ╱  ARE ALL  ╲
            ╱ THE CHARACTERS╲   NO      ( F )
            ╲ IN LEARNING  ╱─────────▶
             ╲ BUFFER 9    ╱
              ╲PROCESSED? ╱
               ╲───────╱
                   │ YES
                   ▼
```

OUTPUT RESULTS OF RECOGNITION OF ONE PAGE,      47

AND STORE A SET OF MODIFIED TREES, CHARACTER

CODES AND CHARACTER IMAGES IN MEMORY SPACE

OF TREE MEMORY 6

END OF RECOGNITION      48

AND MODIFICATION

FIG. 2E

FIG. 3

FIG. 3A

TREE 6E

ROOT NODE

301
(4.6)

W       B

302              303

(4.0)             (0.1)

BRANCH NODES

W    B      304     306   W    B     309

308

(1.10)    (8.5)    (8.1)    (2.3)

W   B    W   B    W   B    W   B

(U:) (M)   (B) (T)   (A) (A)   (W) (T)

LEAF NODES

305        307

FIG. 3B

6E            6F            6G

[ I ]           [ I ]           [ I ]

[ I ]

FIG. 3C

EP 0 343 786 A2

TREE 6E

ROOT NODE
BRANCH NODES
LEAF NODES

FIG. 3D

EP 0 343 786 A2

FIG. 3E

EP 0 343 786 A2

3 x 3 PEL WINDOW
41

|   | X | 0 | 0 | 1 | 1 | 1 | 0 | 0 | 0 | 0 |
|---|---|---|---|---|---|---|---|---|---|---|
|   | 0 | 0 | 0 | 1 | 0 | 1 | 0 | 0 | 0 | 1 |
| 0 | 0 | 1 | 0 | 0 | 0 | 1 | 0 | 0 |   | 2 |
| 0 | 0 | 1 | 0 | 0 | 0 | 1 | 0 | 0 |   | 3 |
| 0 | 0 | 1 | 0 | 0 | 0 | 1 | 0 | 0 |   | 4 |
| 0 | 0 | 1 | 1 | 1 | 1 | 1 | 0 | 0 |   | 5 |
| 0 | 1 | 0 | 0 | 0 | 0 | 0 | 1 | 0 |   | 6 |

31

0  1  2  3  4  5  6  7  8

FIG. 4

| 2 | 3 | 4 |
|---|---|---|
| 1 | X | 5 |
| 8 | 7 | 6 |

41

FIG. 5

EP 0 343 786 A2

|  | 0 | 1 | 2 | 3 | 4 | 5 | 6 | 7 | 8 |
|---|---|---|---|---|---|---|---|---|---|
| 0 | 0 | 0 | 0 | 2 | 95 | 9 | 0 | 0 | 0 |
| 1 | 0 | 0 | 0 | 95 | 100 | 100 | 0 | 0 | 0 |
| 2 | 0 | 0 | 26 | 89 | 24 | 40 | 64 | 0 | 0 |
| 3 | 0 | 0 | 97 | 0 | 0 | 39 | 100 | 0 | 0 |
| 4 | 0 | 0 | 88 | 3 | 1 | 20 | 100 | 0 | 0 |
| 5 | 0 | 0 | 98 | 56 | 48 | 75 | 100 | 2 | 0 |
| 6 | 0 | 1 | 100 | 99 | 70 | 100 | 100 | 11 | 0 |
| 7 | 0 | 15 | 30 | 19 | 16 | 10 | 41 | 54 | 0 |
| 8 | 0 | 90 | 0 | 0 | 0 | 0 | 3 | 95 | 1 |
| 9 | 89 | 100 | 76 | 0 | 0 | 0 | 96 | 100 | 99 |
| 10 | 33 | 68 | 29 | 0 | 0 | 0 | 44 | 57 | 44 |

AREA 12A OF
MAP BUFFER 12

FIG. 6

|  | 0 | 1 | 2 | 3 | 4 | 5 | 6 | 7 | 8 |
|---|---|---|---|---|---|---|---|---|---|
| 0 | 0 | 6 | 37 | 59 | 72 | 21 | 0 | 0 | 0 |
| 1 | 3 | 100 | 100 | 98 | 98 | 100 | 38 | 0 | 0 |
| 2 | 0 | 100 | 99 | 2 | 0 | 67 | 100 | 46 | 0 |
| 3 | 0 | 98 | 99 | 0 | 0 | 0 | 100 | 99 | 0 |
| 4 | 0 | 100 | 100 | 3 | 0 | 61 | 100 | 34 | 0 |
| 5 | 0 | 97 | 100 | 66 | 51 | 96 | 100 | 6 | 0 |
| 6 | 0 | 94 | 100 | 97 | 89 | 99 | 100 | 5 | 0 |
| 7 | 0 | 93 | 100 | 0 | 0 | 0 | 2 | 100 | 92 |
| 8 | 0 | 96 | 100 | 0 | 0 | 0 | 14 | 100 | 84 |
| 9 | 58 | 100 | 100 | 100 | 100 | 100 | 95 | 13 | 0 |
| 10 | 9 | 69 | 61 | 73 | 79 | 78 | 27 | 0 | 0 |

AREA 12B OF
MAP BUFFER 12

FIG. 7

P (%)

```
┌─────────────────────────────────────┐
│ FETCH VALUE OF PROBABILITY Q (%)     │─── 81
│ CORRESPONDING TO PEL ADDRESS         │
│ SPECIFIED BY NODE                    │
└─────────────────────────────────────┘
```

82

P x Q ≧ THRESHOLD? — NO

YES

```
┌─────────────────────────────────────┐
│ GENERATE P x Q (%) ON BLACK          │─── 83
│ OUTPUT                               │
└─────────────────────────────────────┘
```

84

P x (100 − Q) ≧ THRESHOLD? — NO

YES

```
┌─────────────────────────────────────┐
│ GENERATE P x (100 − Q) ON WHITE OUTPUT │─── 85
└─────────────────────────────────────┘
```

FIG. 8